# FASCICULE DE BREVET EUROPEEN

(11) **EP 0 364 358 B1**
(45) Date de publication et mention de la délivrance du brevet: **26.05.1993**
(21) Numéro de dépôt: 89402805.9
(22) Date de dépôt: 11.10.1989
(51) Int. Cl.: B60N 2/24

(54) **Support de siège pour véhicule de transport en commun et siège equipe de ce support**
Sitzuntergestell für Fahrzeuge des öffentlichen Verkehrs und Sitz mit diesem Untergestell ausgerüstet
Seat support for public transport vehicles and seat equipped with this support

(30) Priorité: 14.10.1988 FR 8813551
(43) Date de publication de la demande: 18.04.1990
(73) Titulaire: ETABLISSEMENTS COMPIN Société Anonyme dite:, F-75008 Paris (FR)
(72) Inventeur: Danton, Jean-Louis, F-92100 Boulogne (FR)
(74) Mandataire: Ohayon, Joseph

(56) Documents cités:
- EP-A- 0 222 632
- FR-A- 1 026 800
- FR-A- 1 535 108
- US-A- 4 118 062
- US-E- 29 271

## Description

La présente invention concerne un support de siège, selon le préambule de la revendication 1. Elle concerne également un siège équipé d'un tel support.

On rappelle que l'on désigne par sièges cantilever des sièges pourvus d'une ossature fixée en porte-à-faux sur une cloison ou une paroi latérale du véhicule. Le principal avantage de tels sièges réside bien entendu dans le fait qu'ils ne comportent pas de pieds, ce qui facilite le nettoyage sous les sièges. Des exemples de supports de siège cantilever sont décrits dans les brevets FR-A-1 535 108, qui correspond au préambule de la revendication 1, et EP-A-0 222 632.

Cependant, étant donné que les supports de siège selon ces brevets sollicitent fortement la paroi latérale sur laquelle ils sont fixés, il est nécessaire de renforcer cette dernière afin de lui permettre de résister à l'effort transmis par le support de siège, amplifié par l'effet de bras de levier. Mais ce renforcement est onéreux car il est nécessaire d'augmenter la section de la paroi.

On sait en effet que la paroi des véhicules est construite de telle sorte qu'elle résiste bien à un effort vertical puisque sa hauteur même lui donne une bonne inertie. Par contre, elle résiste mal, aussi bien à une force dirigée horizontalement, c'est-à-dire perpendiculairement au plan de la paroi, qu'à un effort de torsion ayant une résultante horizontale importante, et cela parce que les constructeurs cherchent à réduire son épaisseur dans toute la mesure du possible, afin d'augmenter l'espace imparti aux voyageurs.

Partant de cette constatation, l'invention vise à proposer un support de siège dans lequel l'effort de torsion que produit une force appliquée verticalement à l'extrémité de la branche supportant le siège est transformé en un effort vertical, de manière qu'il ne soit pas nécessaire de renforcer la paroi latérale à laquelle le support de siège est fixé.

A cet effet, l'invention concerne un support de siège du type cantilever tel que défini dans la revendication 1.

La partie horizontale et le pied du support de siège peuvent être réalisés en une seule pièce monobloc. Dans ce cas, l'éperon se situera à la partie inférieure du pied puisque la ligne de rotation du support de siège se trouve précisément à la base du pied.

Dans une autre forme de réalisation, la partie horizontale peut être indépendante du pied, ce dernier pouvant être un élément rigidement fixé à la paroi latérale du véhicule, par exemple une gaine pour le passage de conduites et de canalisations. L'assise peut être posée sur le pied ou en être solidarisée par tout moyen approprié. La ligne de rotation de l'assise se trouvant au sommet du pied, il est avantageux que l'éperon se situe au niveau de la partie horizontale.

L'éperon et son logement peuvent avoir toute forme appropriée. Par exemple, l'éperon peut être en forme de saillie de section triangulaire ayant une face inférieure horizontale et une face supérieure inclinée. Le logement correspondant pourra alors être limité par une paroi inclinée située au même niveau que la face inclinée de l'éperon et ayant sensiblement la même inclinaison que celle-ci, et éventuellement une paroi de fond.

L'éperon et le logement peuvent avoir une forme de section carrée ou rectangulaire. Dans ce cas, la position du support par rapport à la paroi latérale du véhicule est réglable. Le support peut en effet être plus ou moins écarté de la paroi latérale, dans la mesure où l'éperon reste encore engagé à l'intérieur du logement.

Le support de siège est fixé à la paroi latérale au moyen d'éléments de fixation, tels que des boulons traversant des trous horizontaux percés à travers la branche verticale du support et venant se visser dans des écrous situés dans la paroi latérale.

Avantageusement, le logement peut être défini par un profil horizontal fixé sur la paroi latérale et qui court tout le long de celle-ci. Le support de siège peut ainsi être fixé en n'importe quel point le long du véhicule sans avoir à percer le plancher.

Dans le cas où le siège ne se trouve pas à proximité de la paroi latérale, l'éperon s'engage dans un logement formé dans un profilé fixé sur le plancher du véhicule.

Pour renforcer la stabilité du support, la branche verticale peut être munie, du côté opposé à l'éperon, d'un léger retour prenant appui sur le plancher.

L'invention sera mieux comprise à la lecture de la description qui va suivre, faite en regard des dessins annexés dans lesquels :
Les figures 1 à 3 sont des vues en perspective et partiellement en coupe de trois formes de réalisation du support dans lesquelles les éperons coopèrent avec la paroi latérale du véhicule ;
Les figures 4 et 5 représentent deux autres réalisations dans lesquelles les éperons prennent appui sur des profilés ;
La figure 6 montre une autre réalisation dans laquelle l'éperon est formé sur la partie horizontale du support ;
La figure 7 montre une autre réalisation dans laquelle l'éperon est formé sur la paroi latérale du véhicule.
Les figures 8 et 9 représentent deux modes de réalisation de fixation de supports de siège en un emplacement éloigné de la paroi latérale du véhicule.

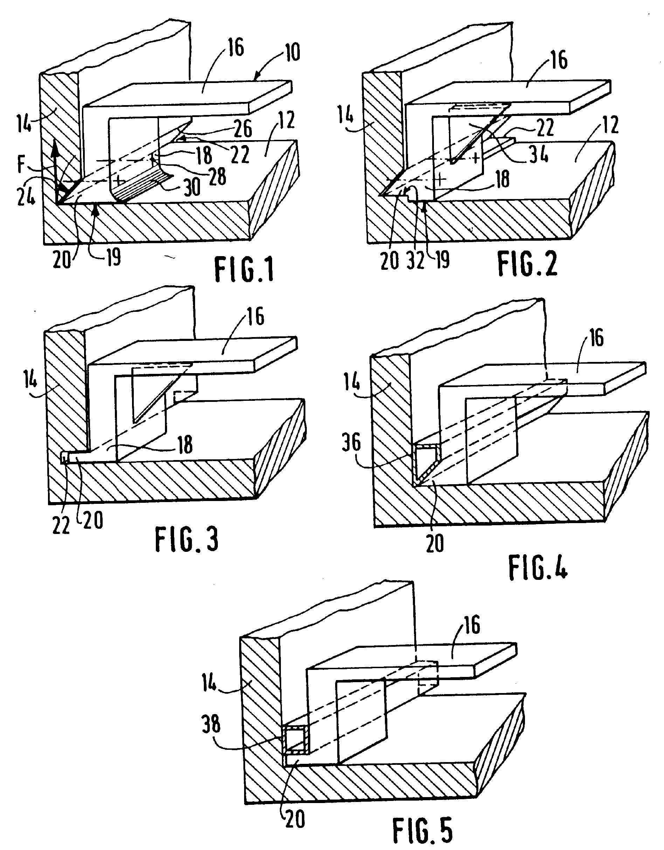

Le support de siège 10 représenté à la figure 1 présente en coupe verticale par un plan perpendiculaire à la fois au plancher 12 de la voiture et à la paroi latérale 14 de celle-ci, un profil sensiblement en L renversé. La partie horizontale 16 du support sert d'assise à un siège non représenté, tandis que sa branche verticale ou pied 18 est au contact de la paroi latérale.

La branche horizontale peut être dimensionnée pour recevoir un siège à une, deux ou davantage de places. Le pied est plus épais que la branche horizontale et repose par sa tranche inférieure 19 sur le plancher. Il est pourvu sur sa face extérieure, et de préférence à la partie inférieure de ladite face, d'une saillie ou éperon 20 qui est susceptible de s'emboîter à l'intérieur d'un logement 22 de forme complémentaire prévu dans la paroi latérale 14.

L'éperon est représenté en coupe avec une forme triangulaire ayant une face inférieure dans le prolongement de la tranche inférieure du pied et qui repose donc sur le plancher du véhicule, et une face inclinée 24 faisant un angle aigu avec ladite face inférieure. Le logement qui reçoit ledit éperon est constitué par une rainure ménagée à la base de la paroi latérale, et qui comporte une paroi rentrante 26 inclinée du même angle que la face 24 de l'éperon.

La rainure peut être formée tout le long de la paroi latérale 14 de manière que le support 10 puisse être installé en n'importe quel point du véhicule.

On notera que l'espace situé sous le support de siège est entièrement dégagé, ce qui facilite l'entretien et le nettoyage du plancher. Lorsqu'un effort de flexion s'exerce sur la branche horizontale 16, l'éperon vient en butée contre la paroi rentrante 26 du logement, empêchant ainsi le support de basculer. Les efforts de flexion sont repris par la paroi latérale 14 du véhicule et par le plancher au niveau du point d'appui de l'arête inférieure de la branche verticale. Les efforts de flexion F s'exercent principalement dans la direction de la tangente T à la circonférence décrite par l'éperon et centrée sur l'arête intérieure de la tranche 19.

Pour éviter le déplacement du support, celui-ci peut être fixé à la paroi latérale par tout moyen de fixation approprié 28, tels que des boulons traversant des trous horizontaux percés à travers la branche verticale du support et venant se visser dans des écrous situés derrière la paroi latérale.

La résistance à la flexion est améliorée en prévoyant un léger retour 30 s'étendant sous le siège, parallèlement à la branche horizontale et s'appliquant sur le plancher.

Au lieu de reposer sur le plancher, l'éperon peut prendre appui sur un élément fixé sur le plancher ou sur la paroi latérale. La figure 2 illustre un support de siège de ce type dans lequel l'éperon 20 est formé légèrement au-dessus de l'extrémité inférieure du pied. Il est engagé à l'intérieur d'un logement de forme complémentaire 22. Le support repose à la fois sur le plancher 12 par sa tranche 19, et par la face horizontale de l'éperon sur la face horizontale 32 du logement qui est légèrement surélevée par rapport au niveau du plancher.

Si nécessaire, en particulier si la branche horizontale 16 a une grande longueur (cas d'un siège double), on prévoit sous cette branche une jambe de force 34 pour la soutenir. Celle-ci est oblique et prend appui contre le pied 18. Elle pourra venir de fabrication avec le support, ou être constituée par une pièce mobile en forme de triangle curviligne incliné, dont une pointe prend appui sur le pied et dont la base est engagée dans une rainure ménagée dans la face inférieure de la branche horizontale.

Dans le mode de réalisation de la figure 3, l'éperon 20 est constitué par une saillie de section rectangulaire s'étendant horizontalement à la base du pied. Le logement qui reçoit cet éperon a une forme de rainure de section complémentaire, formée à la base de la paroi latérale 14 du véhicule.

Cette forme d'éperon et de logement a l'avantage de permettre un réglage de la position du siège par rapport à la paroi verticale. La distance de réglage est égale à la largeur de l'éperon.

Les figures 4 et 5 montrent respectivement des supports de siège identiques à ceux des figures 1 et 3, mais dont les éperons 20 s'engagent sous un profilé 36 ou 38 de forme appropriée fixé sur la paroi latérale du véhicule.

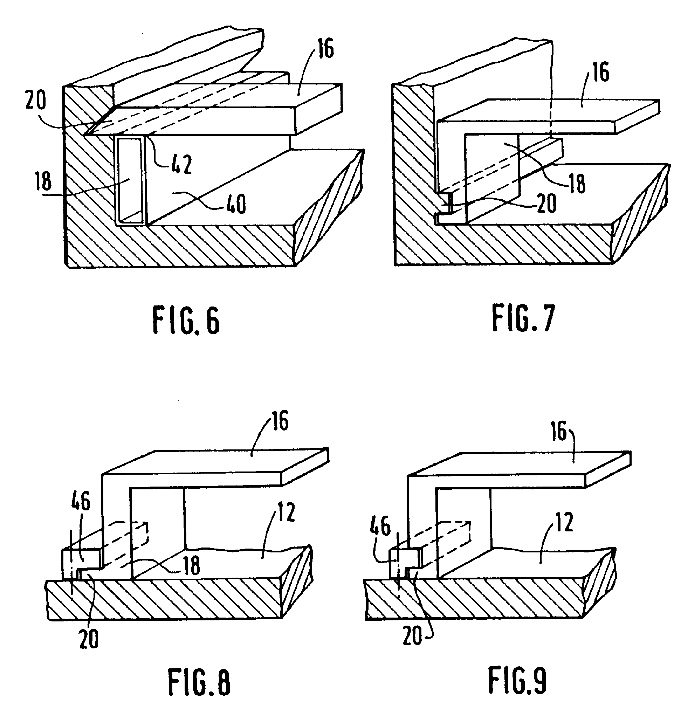

Le support de siège selon la figure 6 comprend une partie horizontale 16 indépendante, se terminant à une extrémité par un éperon 20 qui s'encastre dans un logement de forme correspondante prévu dans la paroi latérale 14 du véhicule. Le pied est constitué par un élément plein ou creux, par exemple une gaine 18, de section rectangulaire on autre, qui est fixée contre la paroi latérale 14 et dans laquelle sont enfermées des canalisations. Cette forme de réalisation est très avantageuse car elle permet d'accéder à la gaine sans avoir à démonter la partie horizontale 16. Pour l'accès aux canalisations la paroi avant 40 de la gaine peut être constituée par un capot démontable.

La partie horizontale peut être soit posée sur la gaine, soit fixée sur celle-ci. En utilisation, elle a tendance à pivoter autour de l'arête intérieure 42 de la gaine. L'effort de torsion produit par le poids de l'utilisateur est donc transformé au niveau de l'éperon par un effort vertical contenu dans la paroi latérale.

Enfin, comme illustré par la figure 7, l'éperon peut être constitué par un bourrelet 20, par exemple de section carrée s'étendant tout le long de la paroi latérale 14 et qui s'engage dans un logement complémentaire creux formé sur le pied.

La figure 8 représente un mode de fixation d'un support de siège en un emplacement du véhicule éloigné des parois latérales. A cet effet, le support de siège est muni d'un éperon 20 analogue à celui du mode de réalisation de la figure 3, mais qui peut avoir la même forme que celui de la figure 1. Cet éperon s'engage sous la branche horizontale d'un profilé 46 en L renversé fixé sur le plancher 12 du véhicule par sa branche verticale.

La figure 9 montre une variante du mode de fixation de la figure 8 adaptée au support de siège de la figure 7.

Le profilé peut également être en forme de U couché sur une de ses ailes, l'autre aile s'engageant dans un logement formé sur le pied du support de siège.

## Revendications

1. Support de siège cantilever pour véhicule de transport en commun, du type présentant, en coupe par un plan vertical, une forme générale en L renversé, ayant une partie horizontale (16) qui sert à la fixation d'au moins un siège, et une partie verticale ou pied (18) qui repose sur le plancher du véhicule ou sur un élément solidaire de la paroi latérale (14) du véhicule, caractérisé en ce que l'une desdites parties (16, 18) du support de siège est pourvue d'une saillie ou éperon (20) qui s'étend sensiblement dans le sens opposé au sens dans lequel s'étend ladite partie horizontale (16) par rapport à ladite partie verticale (18) et qui s'engage dans un logement (24) de forme complémentaire formé sur la paroi latérale (14) ou défini par un élément d'accrochage (36; 38; 46) solidaire de la structure du véhicule, ledit éperon (20) étant positionné de manière que la tangente à la trajectoire circulaire qu'il tend à décrire autour de la ligne de rotation du support, sous l'action d'un effort vertical appliqué sur la partie horizontale (16), soit contenue dans un plan vertical.

2. Support de siège selon la revendication 1, caractérisé en ce que la partie horizontale (16) et le pied (18) sont réalisés en une seule pièce, l'éperon (20) se trouvant alors à la partie inférieure du pied.

3. Support de siège selon la revendication 1, caractérisé en ce que la partie horizontale (16) est constituée par un élément indépendant qui repose sur un autre élément formant pied (18) pouvant être constitué par une gaine, la partie horizontale étant pourvue à une extrémité d'un éperon (20) qui s'encastre dans la paroi latérale du véhicule.

4. Support de siège selon la revendication 1, caractérisé en ce que l'éperon est en forme de saillie de section triangulaire ayant une face inférieure horizontale (19) et une face supérieure inclinée (24), et le logement correspondant est limité par une paroi inclinée (26) située au même niveau que la face inclinée de l'éperon et ayant sensiblement la même inclinaison que celle-ci, et éventuellement une paroi de fond (32).

5. Support de siège selon la revendication 1, caractérisé en ce que l'éperon et le logement ont une forme de section carrée ou rectangulaire.

6. Support de siège selon l'une des revendications précédentes, caractérisé en ce que le support est fixé cela paroi latérale (14) au moyen d'éléments de fixation (28), tels que des boulons traversant des trous horizontaux percés à travers la branche verticale du support et venant se visser dans des écrous situés derrière la paroi latérale.

7. Support de siège selon la revendication 1, caractérisé en ce que le logement est défini sous un profil horizontal (36;38) fixé sur la paroi latérale et qui court tout le long de celle-ci.

8. Support de siège selon la revendication 1, caractérisé en ce que le pied est muni, du côté opposé à l'éperon, d'un retour (30) destiné à prendre appui sur le plancher.

9. Support de siège selon la revendication 1, caractérisé en ce que l'éperon est constitué par un bourrelet (20), par exemple de section carrée s'étendant tout le long de la paroi latérale (14) et qui s'engage dans un logement complémentaire creux formé sur le pied.

10. Support de siège selon la revendication 1, caractérisé en ce que dans le cas où le siège ne se trouve pas à proximité de la paroi latérale, l'éperon (20) s'engage dans un logement formé dans un profilé (46) fixé sur le plancher du véhicule.

11. Support de siège selon la revendication 10, caractérisé en ce que le profilé (46) à une forme en L renversé, sa branche verticale étant fixée sur le plancher (12) du véhicule.

12. Support de siège selon la revendication 10, caractérisé en ce que le profilé a une forme en U et est couché sur l'une de ses ailes latérales, l'autre aile s'engageant dans un logement formé sur le pied du support.

## Patentansprüche

1. Sitzuntergestell mit Ausleger für öffentliche Verkehrsmittel, welches im vertikalen Schnitt eine im wesentlichen umgekehrt L-förmige Form mit einem horizontalen Abschnitt (16) aufweist, der zur Befestigung von mindestens einem Sitz dient, sowie mit einem vertikalen Abschnitt bzw. Fuß (18), der sich auf dem Fahrzeugboden bzw. einem fest mit der Seitenwand (14) des Fahrzeugs verbundenen Element abstützt, dadurch gekennzeichnet, daß eines der beiden Teile (16, 18) zur Abstützung des Sitzes mit einem Vorsprung bzw. einer Strebe (20) versehen ist, der bzw. die sich im wesentlichen entgegengesetzt zu der Richtung erstreckt, in welche sich der horizontale Abschnitt (16) bezüglich des vertikalen Abschnitts (18) erstreckt, und der bzw. die in eine komplementär ausgebildete Aufnahme (24) eingreift, welche auf der Seitenwand (14) ausgebildet bzw. durch ein fest mit dem Wagenaufbau verbundenes Kupplungsteil (36; 38; 46) gebildet wird, wobei die Strebe (20) so angeordnet ist, daß die Tangente zu der Kreisbahn, auf die die Strebe unter Einwirkung einer auf den horizontalen Abschnitt (16) in vertikaler Richtung einwirkenden Kraft um die Drehachse des Untergestells gespannt wird, in einer vertikalen Ebene liegt.

2. Sitzuntergestell nach Anspruch 1, dadurch gekennzeichnet, daß der horizontale Abschnitt (16) und der Fuß (18) in einem Stück ausgeführt sind, wobei sich die Strebe (20) nun im unteren Abschnitt des Fußes befindet.

3. Sitzuntergestell nach Anspruch 1, dadurch gekennzeichnet, daß der horizontale Abschnitt (16) aus einem unabhängigen Element besteht, das auf einem anderen, den Fuß (18) bildenden Element abgestützt ist, welches hülsenförmig ausgeführt sein kann, während der horizontale Abschnitt an einem Ende eine Strebe (20) aufweist, die in der Seitenwand des Fahrzeugs eingelassen ist.

4. Sitzuntergestell nach Anspruch 1, dadurch gekennzeichnet, daß die Strebe die Form eines Vorsprungs mit dreieckigem Querschnitt aufweist, welcher eine horizontale Unterseite (19) und eine geneigte Oberseite (24) aufweist, und daß die entsprechende Aufnahme durch eine Schrägwand (26) begrenzt ist, die sich auf gleicher Höhe mit der Schrägfläche der Strebe befindet und im wesentlichen dieselbe Neigung wie diese aufweist, und gegebenenfalls eine Bodenwandung (32).

5. Sitzuntergestell nach Anspruch 1, dadurch gekennzeichnet, daß die Strebe und die Aufnahme einen quadratischen oder rechteckigen Querschnitt aufweisen.

6. Sitzuntergestell nach einem der vorhergehenden Ansprüche, dadurch gekennzeichnet, daß die das Untergestell an der Seitenwand (14) mittels Befestigungselementen (28) befestigt ist, beispielsweise Schraubenbolzen mit Mutter, welche durch horizontale, durch den vertikalen Schenkel des Untergestells gebohrte Löcher geführt sind und mit Muttern verschraubt sind, welche hinter der Seitenwandung liegen.

7. Sitzuntersgestell nach Anspruch 1, dadurch gekennzeichnet, daß die Aufnahme unter einem horizontalen Profil (36; 38) ausgebildet ist, welches auf der Seitenwandung befestigt ist und ganz entlang derselben verlaüft.

8. Sitzuntergestell nach Anspruch 1, dadurch gekennzeichnet, daß der Fuß auf der der Strebe gegenüberliegenden Seite einen zurückgeführten Abschnitt (30) zur Abstützung auf dem Boden aufweist.

9. Sitzuntergestell nach Anspruch 1, dadurch gekennzeichnet, daß die Strebe aus einer Verdickung (20) mit beispielsweise quadratischem Querschnitt besteht, die entlang der gesamten Seitenwand (14) verläuft und in eine auf dem Fuß ausgebildete komplementäre hohle Aufnahme eingreift.

10. Sitzuntergestell nach Anspruch 1, dadurch gekennzeichnet, daß in dem Fall, daß der Sitz sich nicht in der Nähe der Seitenwand befindet, die Strebe (20) in eine in einem Profil (46) ausgebildete Aufnahme eingreift, welches auf dem Fahrzeugboden befestigt ist.

11. Sitzuntergestell nach Anspruch 10, dadurch gekennzeichnet, daß das Profil (46) die Form eines umgekehrten L aufweist, dessen vertikaler Schenkel auf dem Fahrzeugboden (12) befestigt ist.

12. Sitzuntergestell nach Anspruch 10, dadurch gekennzeichnet, daß das Profil U-förmig ist und mit einem seiner seitlichen Schenkel aufliegt, während der andere Schenkel in eine auf dem Fuß des Untergestells ausgebildete Aufnahme eingreift.

## Claims

1. A cantilever seat support for a public transport vehicle, of the type having, in section along a vertical plane, the general form of an inverted L, with a horizontal part (16) which serves to fix at least one seat, and a vertical part or foot (18) which rests on the floor of the vehicle or on a member integral with the lateral wall (14) of the vehicle, characterized in that one of said parts (16, 18) of the seat support is provided with a projection or spur (20) which extends substantially in the opposite direction from the direction in which extends said horizontal part (16) with respect to said vertical part (18) and which engages in a receptacle (24) of complementary shape formed on the lateral wall (14) or defined by a securing element (36; 38; 46) integral with the structure of the vehicle, said spur (20) being positioned in such a way that the tangent to the circular trajectory which it tends to describe about the line of rotation of the support, under the action of a vertical force applied to the horizontal part (16), is contained in a vertical plane.

2. A seat support according to claim 1, characterized in that the horizontal part (16) and the foot (18) are made in one piece, the spur (20) thus being at the lower part of the foot.

3. A seat support according to claim 1, characterized in that the horizontal part (16) consists of an independent member which rests on another member forming the foot (18) and capable of being formed of a shell, the horizontal part being provided at one end with a spur (20) which is embedded in the lateral wall of the vehicle.

4. A seat support according to claim 1, characterized in that the spur is in the form of a projection of triangular cross-section with a horizontal lower face (19) and an inclined upper face (24), and the corresponding receptacle is limited by an inclined wall (26) situated at the same level as the inclined face of the spur and having substantially the same inclination as the latter, and optionally a base wall (32).

5. A seat support according to claim 1, characterized in that the spur and the receptacle have a square or rectangular cross-sectional shape.

6. A seat support according to any one of the preceding claims, characterized in that the support is fixed to the lateral wall (14) by means of fixing members (28) such as bolts passing through horizontal holes formed through the vertical branch of the support and coming to be screwed into nuts situated behind the lateral wall.

7. A seat support according to claim 1, characterized in that the receptacle is defined below a horizontal profile (36; 38) which is fixed on the lateral wall and which runs along the entire length thereof.

8. A seat support according to claim 1, characterized in that the foot is provided, on the opposite side from the spur, with a returned part (30) designed to rest on the floor.

9. A seat support according to claim 1, characterized in that the spur consists of a flange (20), for example of square cross-section, which extends along the entire length of the lateral wall (14) and engages in a complementary hollow receptacle formed on the foot.

10. A seat support according to claim 1, characterized in that, if the seat is not close to the lateral wall, the spur (20) engages in a receptacle formed in a profiled member (46) fixed to the floor of the vehicle.

11. A seat support according to claim 10, characterized in that the shaped member (46) is in the form of an inverted L, its vertical branch being fixed to the floor (12) of the vehicle.

12. A seat support according to claim 10, characterized in that the profiled member is in the form of a U and lies on one of its lateral wings, the other wing engaging in a receptacle formed on the foot of the support.
